# EUROPÄISCHE PATENTSCHRIFT

(11) **EP 1 816 615 B1**
(45) Veröffentlichungstag und Bekanntmachung des Hinweises auf die Patenterteilung: **16.07.2014**
(21) Anmeldenummer: 06121885.5
(22) Anmeldetag: 06.10.2006
(51) Int. Cl.: G07F 7/10, H04L 9/32

(54) **Schaltungsanordnung für eine Speicherkarte mit Debit- oder Ausweiskartenfunktion**
Circuit arrangement for a memory card with debit or identity card function
Dispositif de commutation pour une carte mémoire dotée d'une fonction de carte de crédit ou d'identité

(30) Priorität: 28.12.2005 DE 102005062763
(43) Veröffentlichungstag der Anmeldung: 08.08.2007
(73) Patentinhaber: Siemens Aktiengesellschaft, 80333 München (DE)
(72) Erfinder: Hess, Erwin, 85521, Ottobrunn (DE); Wedel, Armin, 86415, Mering (DE)

(56) Entgegenhaltungen:
- EP-A- 1 571 776
- WO-A-00/18061
- DE-C1- 4 339 460
- US-A1- 2003 002 663

## Beschreibung

Die vorliegende Erfindung betrifft eine Schaltungsanordnung für eine Speicherkarte mit Debit- oder Ausweiskartenfunktion.

Speicherkarten mit Debitfunktion, so genannte Guthabenkarten, weisen einen Chip auf, der auf eine Plastikkarte aufgebracht ist und über kontaktierbare Modulgehäuse der Dimension etwa eines Quadratzentimeters mit wenigstens 5 Kontaktflächen auf der Speicherkarte angesteuert werden kann. Die Funktionalität der Chips solcher Karten ist üblicherweise nahezu vollständig in Hardware gegossen, d.h., die vom Chip auszuführenden Funktionen spiegeln sich in der Verdrahtung und gegenseitigen Zuordnung der Bauelemente wieder, während softwaregesteuerte Mikrocontroller-Funktionen kaum realisiert sind. Zentrale Einheit eines solchen Chips ist der Speicher, der als maskenprogrammiertes ROM, als einmalig programmierbares PROM und/oder auch als wieder beschreibbares EEPROM ausgebildet sein kann.

Um diesen Speicher herum sind Spannungsversorgung, Adress-, Steuer- und meist auch Sicherheitslogik gruppiert. Die Spannungsversorgung hat dabei die Aufgabe, hohe Spannungen von z.B. 17 V aus einer von einem Terminal gelieferten niedrigeren zu erzeugen, um das Beschreiben der programmierbaren Zellen zu ermöglichen.

Ein Vorteil solcher Karten besteht in der einfachen, dabei aber nur beschränkte Funktionen zulassenden Anordnung der Baugruppen auf dem Chip - mit im Fall von Telefonwertkarten beispielsweise nur etwa 5000 auf dem Substrat angeordneten Transistoren. Besonders hervorzuheben ist aber ein durch die Sicherheitslogik erhöhter Grad an Sicherheit gegenüber Angriffen beispielsweise mit dem Ziel, die auf der Karte gespeicherten Guthabeninformationen zu manipulieren - z.B. als sog. "forcing"-Attacke oder als geheime Informationen ausspähende "probing"-Attacke.

Speicherkarten mit Debitfunktion sind in Form von Telefonwertkarten seit 1989 im Umlauf. Kennzeichnend ist für diesen Typ, dass ein auf der Karte gespeichertes Anfangsguthaben durch Verwendung der Karte in einem Terminal (etwa einer öffentlichen Telefonzelle) nach und nach mit Hilfe eines von der Steuerlogik auf dem Chip kontrollierten Counters irreversibel verringert wird.

Alternativ ist auch der Einsatz als Ausweiskarte wie bei der seit 1994 im Umlauf befindlichen Krankenversicherungskarte vorgesehen. Hier sind Informationen über den Patienten - oder allgemein über den Karteninhaber - auf der Karte, d.h., im Speicher des Chips gespeichert. Das in Deutschland gebräuchliche KVK Speicherkartenprodukt (KVK data carrier) enthält regelmäßig aber keinen Kryptoalgorithmus. Es gibt hingegen durchaus solche data carrier Produkte mit Kryptoalgorithmen, die eine Authentisierung der Karte erlauben, z.B. solche der Firma Atmel.

Sowohl die Debitkarte als auch die Ausweiskarte müssen eine Sicherheitslogik aufweisen, um sich gegenüber einem Terminal, mit dem sie kommunizieren, bzw. einer Datenbank authentifizieren zu können. Dazu ist auf dem entsprechenden Chip hardwaremäßig ein symmetrischer Kryptoalgorithmus realisiert. Jede Speicherkarte besitzt demzufolge einen kartenindividuellen geheimen Schlüssel, der auch dem jeweiligen Terminal bekannt oder zumindest von diesem aus einem zentralen Hauptschlüssel und zusätzlichen Karteninformationen ableitbar ist.

Die Authentifikation verläuft anhand eines Challenge-Response-Verfahrens. Ein Security Access Modul (SAM) generiert eine Zufallszahl, und sendet diese als Nachricht an die Karte (Challenge). Die Karte, d.h. die Sicherheitslogik verschlüsselt die Nachricht mit dem im Speicher der Karte hinterlegten Schlüssel und sendet die verschlüsselte Nachricht an das Terminal zurück (Response). Das Terminal führt parallel die gleichen Rechenoperationen aus und vergleicht die Ergebnisse (verschlüsselte Nachrichten). Sind diese identisch, so muss die Karte als im Besitz des geheimen Schlüssels betrachtet und damit authentisiert gelten. Die weiteren auf der Karte gespeicherten Informationen gelten somit als "echt", z.B. das aktuell gespeicherte Guthaben, etc.

Der Kryptoalgorithmus derzeit verwendeter Telefonwertkarten basiert auf Schlüsseln mit standardisierten Schlüssellängen von 48 Bit. Mögen bei Festlegung der Algorithmen diese Schlüssellängen Anfang der 90er Jahre auch bedrohungsgerecht ausgelegt gewesen sein, so reichen diese Schlüssel gegen Angriffe, die mit heutzutage vorliegenden Mitteln durchführbar sind, nicht mehr aus.

Das Dokument WO 00/18061 offenbart ein Verfahren zur Authentifikation, bei dem durch die gleichzeitige Ausführung zumindest zweier Verarbeitungsvorgänge die Seitenkanalangriffsresistenz erhöht wird. Hierzu wird einen Challenge sowohl einer ersten Verarbeitungseinrichtung als auch einer zweiten Verarbeitungseinrichtung zugeführt. Weitere Daten zur Ermittlung der Response werden aus einem gemeinsamen Speicherbereich den beiden Verarbeitungseinrichtungen zugeführt. Die Ausgangsdaten der Verarbeitungseinrichtungen werden einer Verknüpfungseinrichtung zugeführt, welcher als EXOR-Gatter ausgeführt sein kann.

Ein Problem, das beim aktuellen Eurochip basierten Public Phone System auftritt, ist die dezentrale Architektur des Systems (das SAM ist im Terminal lokalisiert und nicht etwa bei einer Telekom-Zentrale). Damit ist ein Algorithmus (Schlüssel) - Upgrade mit erheblichen Änderungen der Infrastruktur verbunden - im Gegensatz zu einem zentralen, Datenbank-basierten System.

Angesichts stagnierender Umsätze mit Telefonwertkarten bei simultan zunehmendem Markt für die Mobiltelefonie geht die Bereitschaft der Anbieter für öffentliche Telefonie über Telefonzellen zurück, sowohl terminalseitig (security access module) als auch kartenseitig (chip) in die Entwicklung neuer Designs zu investieren, die beispielsweise längere Schlüssellängen für eine erhöhte Sicherheit ermöglichen.

Ein Ansatz, wonach allein auf Kartenseite ein rückwärtskompatibler Chip realisiert wird, indem zwei Algorithmen mit unterschiedlichen Schlüssellängen in dem Schaltkreis des Chips vorgesehen sind, würde keinen Vorteil bringen, weil ein Angriff auf den schwächeren Algorithmus immer auch Informationen über den stärkeren offenbart, soweit auf gleiche Schlüsselteile zurückgegriffen wird. Wird andererseits unabhängig vom schwächeren Algorithmus ein zweiter Algorithmus mit eigenem, längeren Schlüssel eingerichtet, so entsteht ein nicht zu vertretender Designaufwand, denn das Layout verändert sich vollständig.

Es besteht folglich ein Interesse, ein mit gängigen Terminal Security Access Modulen kompatibles Migrationsprodukt für Speicherkarten mit Debit- oder Ausweisfunktion anzubieten, dass darüber hinaus einen erhöhten Sicherheitsgrad gegenüber Angriffen zur Berechnung des gespeicherten Schlüssels sowie zur Bestimmung des dazugehörigen Algorithmus auf der Karte gewährleistet.

Diese und weitere der Erfindung zugrunde liegende Aufgaben werden gelöst durch eine Schaltungsanordnung für Speicherkarten mit Debit- oder Ausweisfunktion mit den Merkmalen des Anspruchs 1 sowie durch ein Verfahren zur Authentikation einer solchen Speicherkarte gemäß Anspruch 12.

Die Schaltungsanordnung für Speicherkarten weist anstatt bisher einen nunmehr zwei Schaltkreise auf, die jeweils einen Speicher umfassen. In den Speichern sind Adressbereiche für jeweils zwei Schlüssel vorgesehen. Einer Ausgestaltung der Erfindung zufolge beträgt die Größe jeweils eines der Adressbereiche für den Schlüssel 48 Bit. Die Schaltkreise arbeiten als parallele Rechenwerke für die Verschlüsselung, wobei der grundsätzliche Mechanismus des Challenge-Response-Verfahrens für die Authentikation gegenüber etwa einem Terminal erhalten bleibt.

Es liegen in der Schaltungsanordnung folglich mindestens vier Adressbereiche für Schlüssel vor. Ein kürzerer, rückwärtskompatibler Schlüssel von z.B. 48 Bit Schlüssellänge ist in einem der Adressbereiche eines der Schaltkreise angeordnet. Ein längerer, die erhöhte Sicherheit gewährleistender Schlüssel besteht aus zwei zusammengehörigen Teilen, deren erster Teil in dem vom kurzen Schlüssel nicht belegten Adressbereichs des ersten Schaltkreises gespeichert ist, und dessen zweiter Teil in einem Adressbereich des zweiten Schaltkreises gespeichert ist. Das heißt, der längere Schlüssel ist schaltkreisübergreifend gespeichert.

Die Erfindung ist keinesfalls beschränkt auf 48 Bit und 96 Bit lange Schlüsselpaare, die für Kompatibilität sorgen. Einem anderen Beispiel zufolge können die Schlüssel auch 64 Bit und 128 Bit lang sein. Es ist auch möglich, von dem Faktor zwei abzuweichen und den zur Verfügung stehenden Speicherbereich im Falle des kürzeren oder längeren Schlüssels nicht voll zu nutzen.

Der vierte Adressbereich des zweiten Schaltkreises braucht keine Schlüsseldaten zu umfassen, kann jedoch mit schlüsselähnlicher Information belegt sein.

Die beiden Schaltkreise umfassen des Weiteren jeweils eine Sicherheitslogikeinheit, mit welcher der jeweilige Schlüsselinhalt des einen oder des anderen Adressbereichs verschlüsselt werden kann. Jede Sicherheitslogikeinheit greift also auf den eigenen Speicherbereich zu, in welchem der Schlüssel (kurzer Schlüssel) bzw. der Schlüsselteil (längerer Schlüssel) gespeichert ist.

Mit den soweit beschriebenen Merkmalen wird der Vorteil ersichtlich, dass die Schaltkreis-Layouts derzeit bereits gängiger Chips, die allerdings bisher immer nur einen Schaltkreis umfassten, für die vorliegende Schaltungsanordnung wieder verwendet werden können. Die aufwändige Entwicklung eines neuen Designs ist damit nicht erforderlich.

Die Verschlüsselung des längeren, aus zwei Teilen bestehenden Schlüssels, erfolgt wie oben beschrieben getrennt in den Schaltkreisen. Um für Kompatibilität der Algorithmen zu sorgen, sind nun zwei weitere Logikeinheiten vorgesehen.

Eine erste Logikeinheit führt dabei auf die vom zweiten Schaltkreis stammende verschlüsselte Nachricht eine logische Operation, genauer: eine logische "UND"-Verknüpfung, aus. Vergleichsoperand ist entweder durchweg eine logische "1" oder eine logische "0". Der Operand bleibt für die bitweise durchgeführte Verknüpfung konstant, d.h. er wird vor der Operation - ggf. auch schon vor der Verschlüsselung der Nachricht in dem zweiten Schaltkreis - festgelegt und dann für die weiteren Operationen in Bezug auf die Verknüpfung mit dieser Nachricht unverändert gelassen.

Diese erste Logikeinheit dient dazu, für das zum ersten Schaltkreis parallele Rechenwerk des zweiten Schaltkreises eine Aufbereitung der verschlüsselten Nachricht durchzuführen. Ist für die Authentikation der Speicherkarte die Verschlüsselung über einen kurzen Schlüssel ausgewählt worden, so wird im ersten Schaltkreis die simultan an beide Schaltkreise übermittelte Nachricht (zum Beispiel eine vom Terminal erzeugte Zufallszahl) mit den Daten des zweiten Bereichs im ersten Speicher des ersten Schaltkreises verschlüsselt.

Der zweite Schaltkreis verschlüsselt parallel die gleiche Nachricht mit den Daten des vierten Adressbereichs in seinem zweiten Speicher. Weil die Funktionalität des ersten Schaltkreises jedoch für die Verschlüsselung mit dem kurzen Schlüssel vollkommen ausreicht, wird die vom zweiten Schaltkreis beziehungsweise von dessen Sicherheitslogikeinheit verschlüsselte Nachricht in der ersten Logikeinheit mit einer logischen "0" "UND"-verknüpft. Die Nachricht wird dadurch bitweise auf "0" zurückgesetzt. Für die nachfolgend durchzuführende logische Operation spielt die zurückgesetzte, verschlüsselte Nachricht dann keine Rolle mehr.

Für den Fall der Verschlüsselung mit einem langen Schlüssel, der wie beschrieben in zwei Teilen sowohl im ersten als auch im zweiten Schaltkreis gespeichert ist, wird die "UND"-Verknüpfung der mit den Daten des dritten Bereichs verschlüsselten Nachricht bitweise mit einer logischen "1" durchgeführt. Diese Operation bewirkt, dass die Nachricht des zweiten Schaltkreises in der Abfolge von Bitwerten unverändert bleibt.

Der Vergleichsoperand "0" oder "1" wird folglich in Abhängigkeit davon ausgewählt, ob eine Verschlüsselung mit erhöhter Sicherheit (langer Schlüssel, gespeichert in erstem und drittem Adressbereich)) oder mit konventionellem Sicherheitsgrad (kurzer Schlüssel, gespeichert im zweiten Adressbereich) auszuführen ist.

Eine Ausgestaltung sieht vor, im Speicher eine oder mehrere festgelegte Adressen einzurichten, in denen beispielsweise anhand eines Steuersignals vom Terminal eingespeichert wird, welcher Adressbereich für Schlüsseldaten bei der vorliegenden Authentikation zu verwenden ist, d.h., welcher Sicherheitsgrad einzurichten ist. Konventionelle Security Access Modulen (SAM) werden unter dieser Adresse Bits zur Auswahl des zweiten Adressbereichs setzen. Zu erhöhter Sicherheit migrierte SAMs können hier optional Bits für die Auswahl des ersten beziehungsweise dritten Speichers setzen.

Weitere Ausgestaltungen sehen vor, die beiden Schaltkreise möglichst aneinander anzugleichen, um die Wiederverwendbarkeit existierender Layouts zu verbessern. Dazu sind die wenigstens fünf Kontaktanschlüsse, über welche die Schaltungsanordnung der Speicherkarte mit einem Terminal verbunden werden kann, sowohl mit den Anschlusseinheiten des ersten als auch des zweiten Schaltkreise verbunden. Jeder Schaltkreis erhält damit die gleichen Signale vom Terminal über die Ein-/Ausgabeeinheit, die Systemuhr und den System-Reset, sowie für das Versorgungs- und das Grundpotential.

Zurückkehrend zu den logischen Operationen, die auf den beiden parallel verschlüsselten Nachrichten auszuführen sind, um die Kompatibilität zwischen altem und migriertem System zu gewährleisten, ist auch eine zweite Logikeinheit vorgesehen, die eine logische "exklusiv-ODER"-Verknüpfung ("EXOR") der beiden Nachrichten vornimmt. Die Nachricht, die die zweite Logikeinheit vom zweiten Schaltkreis erhält, ist dabei bereits von der ersten Logikeinheit prozessiert worden. Es liegt also entweder eine auf "0" zurückgesetzte Nachricht auf dieser Seite vor, oder es handelt sich um die ursprünglich im zweiten Schaltkreis verschlüsselte Nachricht.

Durch die "EXOR"-Verknüpfung wird die Länge der Bitsequenz der verschlüsselten Nachricht nicht verändert. Altes und migriertes System unterscheiden sich in der Länge der an das Terminal zurückgegebenen Nachricht also nicht. Jedoch ist mit Vorteil die durch die zweite Logikeinheit prozessierte bzw. verknüpfte Nachricht nicht mehr in entgegen gesetzter Richtung durch einen Angreifer entschlüsselbar, wenn es sich um den Fall des langen, schaltkreisübergreifenden Schlüssels handelte.

Somit wird einer Ausführungsform zufolge vorgeschlagen, zwei Schaltkreise mit Speicher und Sicherheitslogik parallel auf einer Speicherkarte einzurichten, wobei beide Schaltkreise je zwei unterschiedliche Adressbereiche im Speicher für die Speicherung von Schlüsseln reserviert haben, und wobei der Datenausgang beider Schaltkreise mit Logikeinheiten verbunden ist, die in Abhängigkeit von der Auswahl der Schlüssellänge entsprechend jeweils einem der Adressbereiche bitweise eine logische "UND-Verknüpfung" mit einer "0" oder "1" auf die verschlüsselte Nachricht eines der Schaltkreise und anschließend eine logische "exklusiv-ODER"-Verknüpfung auf beide verschlüsselte Nachrichten ausüben.

Ein weiterer Aspekt der Erfindung besteht darin, dass der längere 96-Bit Kryptoalgorithmus eine zum kürzeren, kompatiblen Algorithmus veränderte Parametrierung bekommt. Dies gilt für beide Hälften der Verschlüsselung. Damit ist gewährleistet, dass ein Angreifer, der den kürzeren, kompatiblen Algorithmus z.B. durch Reverse Engineering ermittelt hat, keine Informationen über Teile des längeren 96-Bit-Algorithmus besitzt. Ein wesentliches Sicherheitsmerkmal des vorgeschlagenen Produkte kann daher sein, dass sowohl der Schlüssel, als auch der Algorithmus proprietär sind und sich die Sicherheit
- im Gegensatz zu den bisher publizierten Algorithmen - nicht ausschließlich auf das Schlüsselgeheimnis stützt.

Die Algorithmuseigenschaften werden somit bei der Verwendung des verlängerten, z.B. 96 Bit langen Schlüssels in beiden Rechenwerkhälften spezifisch eingestellt, d.h. auch für diejenige Hälfte bzw. denjenigen Schaltkreis der Anordnung, welcher die Abwärts-Kompatibilität erfüllt, werden die Algorithmuseigenschaften in dessen Verschlüsselungslogik gegenüber dem ersten Schaltkreis verändert, welcher die kompatiblen Grundfunktionen anbietet (z.B. 48-Bit Verschlüsselung).

Es soll nun anhand eines Ausführungsbeispiels mit Hilfe einer Zeichnung die Erfindung genauer erläutert werden. Darin zeigen:
- Figur 1: eine Speicherkarte mit Kontakt-Pads und zwei Schaltkreisen, deren Anschlüsse miteinander verbunden sind;
- Figur 2: die beiden Schaltkreise aus Figur 1 mit Logikeinheiten gemäß einem Ausführungsbeispiel der Erfindung;
- Figur 3: eine schematische Darstellung des Verschlüsselungsvorgangs;

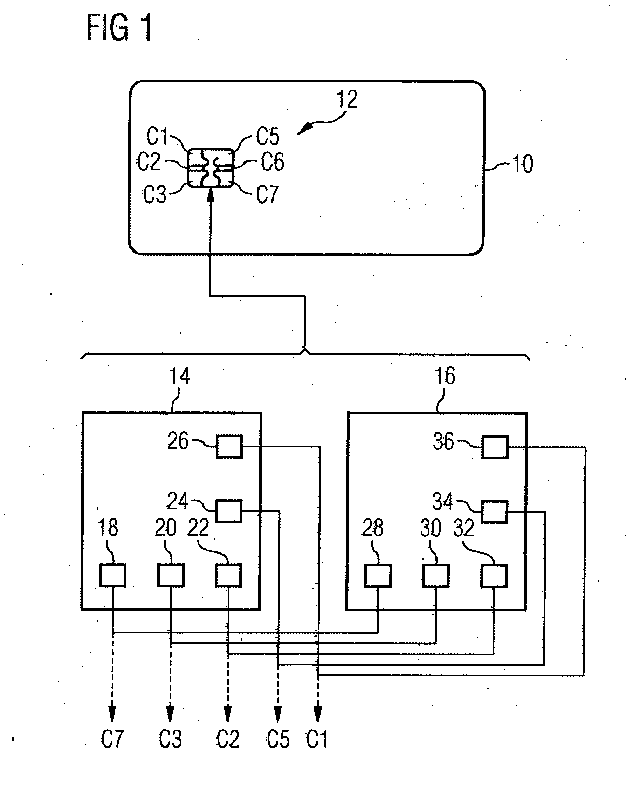

Ein Ausführungsbeispiel der Erfindung ist in Figur 1 dargestellt. Eine Speicherkarte 10 weist ein Muster 12 von Kontakt-Anschlusspads C1 - C3, C5-C7 auf, wie sie bei Telefonwertkarten üblich sind. Bei der Speicherkarte 10 kann es sich allgemein um solche mit Debitfunktion (Guthabenfunktion) oder Ausweisfunktion handeln. Mit den Anschlusspads C1 - C3, C5-C7 verbunden sind Kontaktanschlüsse 18, 20, 22, 24, 26, 28, 30, 32, 34, 36 zweier Schaltkreise 14, 16, die auf der Speicherkarte 10 eingerichtet sind. Vorteilhafterweise befinden sich diese direkt unterhalb des Anschlussmusters 12. Jeder der Schaltkreise 14, 16 weist einen Anschluss für die Ein-Ausgabe (I/O) 18, 28, für die Systemuhr (CLK) 20, 30, für den System-Reset (RST) 22, 32 sowie für die Versorgungsspannung (VCC bzw. VDD) 26, 36 und das Grundpotential (GND bzw. VSS) 24, 34 auf. Die Anschlüsse beider Schaltkreise sind jeweils auch miteinander verbunden.

Bei den Schaltkreisen kann es sich jeweils um solche handeln, wie sie auch unter der Bezeichnung "Eurochip 66" bekannt sind und von der Infineon Technologies AG, München unter der Bezeichnung der SLE663-Familie unter anderem für Telefonwertkarten vertrieben werden. Die Erfindung ist aber nicht auf bestimmte Chiptypen oder Anwendungen derselben beschränkt auszulegen. Des Weiteren sind beide Schaltkreise 14, 16 in diesem Ausführungsbeispiel auf demselben monolithischen Substrat gebildet, formen also gemeinsam einen Chip aus. Es ist aber gleichwohl auch möglich, beide Schaltkreise auf voneinander getrennten Substraten zu bilden und diese gemeinsam als einander zugeordneten - und ggf. mit den jeweiligen Vorderseiten einander zugewandten - Stapel zusammenzufügen, welches Vorteile bezüglich der Sicherheit gegenüber messtechnischen Angriffen bieten kann.

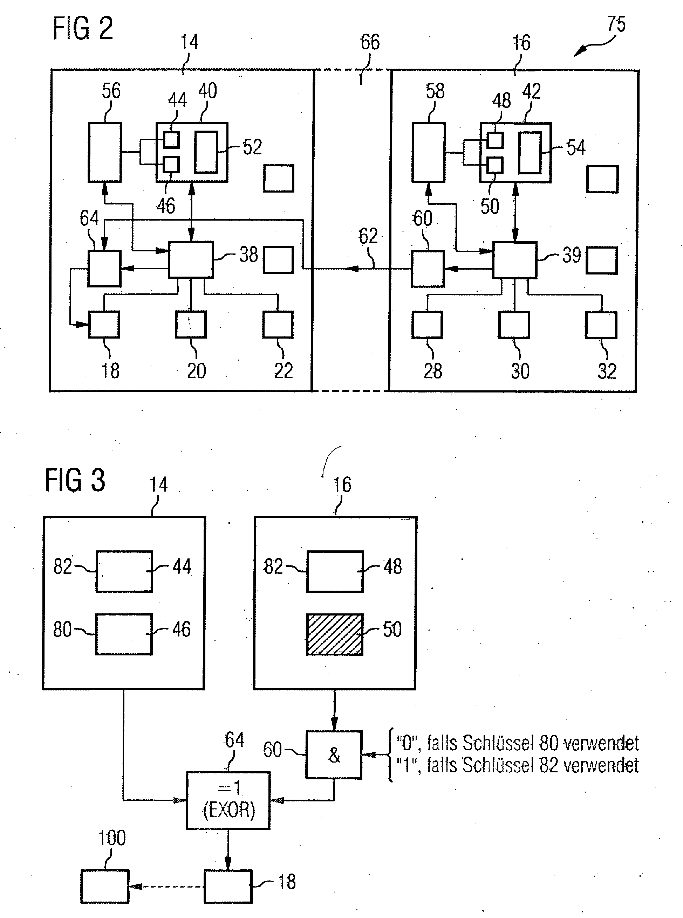

Figur 2 zeigt eine genauere Darstellung der beiden Schaltkreise, bei dem die Verbindungen der Kontaktanschlüsse der Übersichtlichkeit halber weggelassen wurden. Es soll der erste Schaltkreis 14 beschrieben werden. Der zweite Schaltkreis ist mit wenigen noch aufzuzeigenden Ausnahmen ähnlich aufgebaut.

Eine Steuerlogik 38 erhält jeweils von den Anschlüssen 18, 20, 22 Signale für den Reset, die Systemuhr und für die Ein- und Ausgabedaten. Die Steuerlogik ist mit dem Speicher 40 verbunden. Der Speicher kann z.B. etwa 240 Bit umfassen, von denen beispielsweise 16 Bit als maskenprogrammiertes ROM, der Rest als EEPROM ausgeführt ist. 104 Bit können für Anwender- und Herstellerdaten sowie für den Guthabenbereich 52 reserviert sein.

Der Guthabenbereich 52 (Counter area) umfasst beispielsweise jeweils 8 Bit im EEPROM- bzw. PROM-Speicher, die in 5 Stufen angeordnet sind (zusammen also 40 Bit) als fünfstufiger Oktalzähler eingesetzt werden, mit dem das Guthaben irreversibel auf Steuersignale des Terminals hin herabgesetzt wird. Die Guthabenberechnung und die technische Realisierung in Schaltkreisen ist dem Fachmann aus der Literatur hinlänglich bekannt.

Die anderen z.B. etwa 136 Bit umfassen vor allem Schlüsseldaten für die Authentikation. Dabei ist ein erster Adressbereich 44 mit 48 Bit Länge für einen ersten Schlüssel 82 und ein zweiter Adressbereich 46 mit 48 Bit Länge für einen zweiten Schlüssel 80 vorgesehen. Der erste Schlüssel 82 besitzt dabei eine Länge von 96 Bit. Der zweite Teil des ersten Schlüssels 82 mit 48 Bit Länge ist im dem Adressbereich 48 des Speichers 42 des zweiten Schaltkreises 16 abgespeichert. Der weitere Adressbereich 50 des zweiten Speichers enthält beliebige Daten, er wird jedenfalls für das vorliegende, beispielhafte Migrationsprodukt nicht mit Schlüsseldaten belegt (angedeutet durch eine Schraffur in Fig. 3). Die vier Adressbereiche 44, 46, 48, 50 der beiden Speicher 40 und 42 sind als einmalig programmierbare PROM ausgebildet, in denen von Seiten des Herausgebers der Karte die kartenindividuellen Schlüssel 80, 82 vor Abgabe an den Kunden einprogrammiert werden. Bei diesem auch Personalisierung genannten Vorgang werden die Speicher 40, 42 getrennt angesprochen. Das getrennte Ansprechen wird durch eine in den Figuren nicht gezeigte Schaltung ermöglicht. Dazu wird im Issuer Mode - das ist ein Betriebsmodus, in welchem der Kartenherausgeber z.B. die Personalisierung vornimmt - respektive für Testzwecke auch im Testmode eine simple Multiplexschaltung aktiviert, die nach Eingabe eines entsprechenden Steuerkommandos einen der beiden Chips jeweils aktiviert und gleichzeitig den anderen deaktiviert. Somit kann jeder Schaltkreis im Test- und Issuer Mode separat angesteuert werden.

Die Verschlüsselung erfolgt mittels einer Sicherheitslogikeinheit 56 (bzw. 58 im zweiten Schaltkreis). Sie umfasst jeweils ein Schieberegister mit Rückkopplungslogik. Das bedeutet, dass im Register vorgerückte Bits über einzelne logische Elemente einen manipulierenden Einfluss auf im Register nachrückende Bits ausüben. Die Rückkopplungslogik kann dabei linear (z.B. EXOR-Funktionen) oder nichtlinear sein. Die Verschlüsselung erfolgt also durch vorab festgelegte, logische Operationen ausführende Anordnungen von Bauelementen, und nicht etwa durch einen softwaregesteuerten Mikrocontroller. Die Verschlüsselung kann lediglich durch Parameter beeinflusst werden, die vom Terminal im Rahmen der Verwendung der Karte übermittelt werden.

Eine besondere Ausführungsform sieht vor, den ersten Schaltkreis 14 mit einer linearen Rückkopplungslogik zu versehen, den zweiten Schaltkreis 16 dagegen mit einer nichtlinearen Rückkopplungslogik (oder umgekehrt). Beide Layouts sind einfach aus bestehenden Typen zu erzeugen (maskenprogrammierbar) und zusammenzufügen, so dass kein größerer Designaufwand erforderlich ist. Die Sicherheit wird aber weiter erhöht. Denn mit mathematischen Tabellensuchverfahren beispielsweise kann lediglich - im Falle des längeren Schlüssels - derjenige Teil des Schlüssels analysiert werden, welcher durch die lineare Rückkopplung verschlüsselt wird.

Mit SPA oder DPA-Angriffen, bei denen auf messtechnische Art die durchgeführten Operationen anhand z.B. der Stromaufnahme im Schaltkreis bestimmt werden können, werden hingegen nur die nichtlinear verschlüsselten Nachrichten analysiert. Durch die vorliegend vorgesehene EXOR-Verknüpfung beider Schlüsselteile ist dann aber anhand des verschlüsselten Ergebnisses nicht mehr einheitlich auf die eine oder andere Angriffsmethode zurückzugreifen. Das Layout für die Schaltkreise auf der Speicherkarte enthält z.B. sowohl lineare, als auch nichtlineare Verknüpfungsfunktionen. Welche Funktion aktiviert wird, ist durch ein Signal definiert, dass durch einen Authentifikationsbefehl an den jeweiligen Schaltkreis gesetzt oder zurückgesetzt wird.

Als Verschlüsselungsalgorithmen kommen hier alle denkbaren, mit dem gesteigerten Sicherheitsbedürfnis im Einklang stehenden Algorithmen in Betracht. Das vorliegende Beispiel sieht etwa Stromchiffre- oder stromchiffrebasierte Algorithmen vor.

Gemäß dieser Ausführungsform wird eine im Challenge-Response-Verfahren vom Terminal zum Zweck der Authentikation übermittelte Nachricht (eine Zufallszahl) über die Ein-/Ausgabeeinheiten 18, 28 übermittelte Nachricht durch die Sicherheitslogikeinheiten 56, 58 verschlüsselt, die dabei auf die Schlüssel 80 oder 82 zurückgreifen. Welcher Schlüssel dabei verwendet wird, hängt beispielsweise von einem Steuersignal ab, das vom Terminal übermittelt wird. Mit dem Signal kann eine etwa nur ein Bit umfassende Adresse im Speicher 40, 42 mit einer logischen "1" oder "0" beschrieben werden. Mit einer "1" kann demnach auf den ersten Adressbereich gezeigt werden. Mit einer weiteren, 1 Bit umfassenden Adresse kann durch Setzen einer "1" auf den zweiten Adressbereich verwiesen werden. Gleiches gilt für eine entsprechende Bitadresse in Bezug auf den dritten oder vierten Adressbereich 48, 50 im zweiten Speicher 42.

Figur 3 zeigt eine schematische Übersicht über den Ablauf der Verschlüsselung. Die jeweils im ersten und zweiten Schaltkreis 14, 16 verschlüsselten Nachrichten werden an Logikeinheiten 60, 64 übermittelt, die logische Operationen ausführen. Die erste Logikeinheit im zweiten Schaltkreis führt eine logische "UND"-Verknüpfung der verschlüsselten Nachricht mit einer "0" oder einer "1" aus. Im vorliegenden Beispiels korrespondiert die Wahl dieses Operanden der Verknüpfung mit dem Eintrag unter der genannten Bitadresse im zweiten Speicher, die festlegt, welcher Schlüssel zu verwenden ist. Für den speicherübergreifenden ersten Schlüssel 82 wird eine "1" gewählt, für den kürzeren zweiten Schlüssel 80, der nur im Speicher 40 des ersten Schaltkreises 14 gespeichert ist, wird eine "0" gewählt.

Die logische "UND"-Verknüpfung mit einer "1" lässt die einzelnen Bits der Nachricht unverändert. Bei entsprechender Verknüpfung mit einer "0" wird deren gesamter Inhalt zurückgesetzt. Auf diese Weise wird die Verschlüsselung der im zweiten Speicher lediglich beliebigen Daten ohne Schlüsselzuordnung unwirksam gemacht (bei Wahl des kurzen Schlüssels). Die erste Logikeinheit 60 wirkt gleichsam als Filter für den zweiten Teil des längeren Schlüssels.

Im vorliegenden Beispiel ist die Position der ersten Logikeinheit 60 im Bereich des zweiten Schaltkreises 16 angelegt, dem sie funktional zugeordnet ist. Es ist jedoch grundsätzlich auch denkbar, sie im Bereich des ersten Schaltkreises 14 anzuordnen. Jedenfalls ist sie durch Schutzmaßnahmen wie weiteren Metallisierungsschichten vor Probung und Forcing Angriffen zu schützen.

Über eine Verbindung 62 wird das Verknüpfungsergebnis vom zweiten Schaltkreis 16 an eine zweite Logikeinheit 64 übermittelt, die im Bereich des ersten Schaltkreises 14 angeordnet ist. Auch diese Positionierung stellt eine nicht notwendige Limitierung der Erfindung dar. Die zweite Logikeinheit kann beispielsweise auch im Bereich des zweiten Schaltkreises oder überhaupt außerhalb beider Layouts positioniert sein. Mit ihr wird eine "EXOR"-Verknüpfung durchgeführt ("exklusiv ODER"). Der zweite Operand ist hier die vom ersten Schaltkreis verschlüsselte Nachricht. Ein zwischen den Schaltkreisen 14, 16 im Substrat liegender Bereich 66 ist ebenfalls durch geeignete Schutzmaßnahmen (siehe oben) vor Angriffen geschützt, soweit die Verbindung 62 durch diesen hindurch verläuft.

Die lineare "EXOR"-Verknüpfung wird bitweise auf die beiden Nachrichten angewendet. War die verschlüsselte Nachricht des zweiten Schaltkreises aufgrund Wahl des kurzen Schlüssels auf Werte von "0" zurückgesetzt worden, so führt die "EXOR"-Verknüpfung mit der verschlüsselten Nachricht des ersten Schaltkreises dazu, dass diese letztgenannte Nachricht unverändert bleibt. Im Ergebnis entspricht dies dem konventionellen Fall, durch die beiden Logikeinheiten 60, 64 werden im Zusammenspiel die Berechnungen des zweiten Schaltkreises unwirksam gemacht.

War dagegen die verschlüsselte Nachricht des zweiten Schaltkreises 16 durch die erste Logikeinheit 60 hindurch gelassen worden, so findet nun die Verknüpfung der beiden Nachrichten statt, aus deren Ergebnis auch nicht mehr auf die beiden Teilnachrichten zurück geschlossen werden kann. Die ursprünglich eingegangene Nachricht wird daher effektiv mit einen 96 Bit langen Schlüssel 82 verschlüsselt. Das Verknüpfungsergebnis kann dabei eine Länge von nur 16 Bit besitzen.

Über die Ein-/Ausgabeeinheit 18 wird das Verknüpfungsergebnis an das Terminal zurückgesendet. Dort führt das Terminal bzw. dessen Security Access Modul (SAM) die gleichen Operationen aus, wie sie vorher in der Karte berechnet wurden - einschließlich der logischen Verknüpfungen, falls der lange, 96 Bit lange Schlüssel gewählt wurde.

Es liegt dabei im Rahmen der vorliegenden Erfindung, die beiden Logikeinheiten (60, 64) als gemeinsame funktionelle Logikeinheit auszubilden.

## Patentansprüche

1. Schaltungsanordnung (75) für eine Speicherkarte (10) mit Debit- oder Ausweiskartenfunktion, umfassend:
- einen ersten Schaltkreis (14), welcher ferner aufweist:
(a) einen ersten Speiche (440) mit einem ersten Bereich (44), in dem Daten eines ersten Schlüssels (82) gespeichert sind, und mit einem zweiten Bereich (46), in dem Daten eines zweiten Schlüssels (80) gespeichert sind, und
(b) eine erste Sicherheitslogikeinheit (56) zur Verschlüsselung einer Nachricht anhand der Daten des ersten oder zweiten Schlüssels (80, 82), wobei der erste Schaltkreis (14) die Nachricht von einem mit der Speicherbarte (10) verbindbaren Terminal (100) empfangen kann;
- einen zweiten Schaltkreis (16), welcher ferner aufweist:
(a) einen zweiten Speicher (42) mit einem dritten Bereich (48), in dem weitere Daten des ersten Schlüssels (82) gespeichert sind, und mit einem vierten Bereich (50), in dem beliebige Daten gespeichert sind, und
(b) eine zweite Sicherheitslogikeinheit (58) zur Verschlüsselung der von dem Terminal (100) simultan an den zweiten Schaltkreis (16) übermittelten Nachricht anhand der weiteren Daten des ersten Schlüssels (82) oder der beliebigen Daten;
- eine erste Logikeinheit (60), die mit dem zweiten Schaltkreis (16) verbunden ist und in Abhängigkeit von einer Auswahl des ersten oder zweiten Schlüssels (80, 82) bitweise eine logische "Und"-Verknüpfung der im zweiten Schaltkreis (16) verschlüsselten Nachricht jeweils ausschließlich mit einer logischen "1" oder ausschließlich einer logischen "0" durchführt;
- eine zweite Logikeinheit (64), die jeweils mit dem ersten Schaltkreis (14) und der ersten Logikeinheit (60) verbunden ist und bitweise eine logische "exklusiv ODER"- Verknüpfung der von der ersten Sicherheitslogikeinheit (56) des ersten Schaltkreises (14) verschlüsselten Nachricht mit der von der zweiten Sicherheitslogikeinheit (58) des zweiten Schaltkreises (16) verschlüsselten Nachricht durchführen kann,
- eine Ein-/Ausgabeeinheit (18), die mit der zweiten Logikeinheit (64) verbunden ist, und die logisch verknüpfte, verschlüsselte Nachricht von dieser empfangen und an das Terminal übermitteln kann.

2. Schaltungsanordnung (75) nach. Anspruch 1, bei der die Daten des ersten Schlüssels (82) in dem ersten und dritten Bereich (44, 48) zusammen eine Länge besitzen und die Daten des zweiten Schlüssels (80) in dem zweiten Bereich (46) eine Länge besitzen, wobei die erste Länge doppelt so viele Bits umfasst als die zweite Länge.

3. Schaltungsanordnung (75) nach Anspruch 1 oder 2, bei der die beiden Schaltkreise (14, 16) jeweils eine Ein-/Ausgabeeinheit (18, 28), eine Spannungserzeugungseinheit und eine Steuerlogik (38, 39) mit Adressierungseinheit zur Adressierung des Speichers (40, 42) besitzen, wobei die Steuerlogik (38, 39) eingerichtet ist, in einem fünften Bereich (52, 54) des ersten (40) und/oder zweiten Speichers (42) eine irreversible Abwertung eines in dem fünften Bereich (52, 54) gespeicherten Betrags vorzunehmen.

4. Schaltungsanordnung (75) nach einem der Ansprüche 1 bis 3, bei der jeweils Anschlusseinheiten für eine Systemuhr (20, 30), einen System-Reset (22, 32), ein Grundpotential (24, 34) und ein Versorgungspotential (26, 36) vorgesehen sind, die jeweils von Schaltkreis (14) zu Schaltkreis (16) miteinander und jeweils gemeinsam mit entsprechenden Kontakt-Flächen (C1-C5-C7 C3), die auf der Speicherkarte (10) angeordnet sind und zur Kontaktierung durch das Terminal eingerichtet sind, verbunden sind.

5. Schaltungsanordnung (75) nach einem der Ansprüche 1 bis 4, bei dem die Sicherheitslogikeinheit (56, 58) jeweils Schieberegister aufweist, anhand welcher die Verschlüsselung vermittels einer Rückkopplungslogik zwischen den Plätzen in den Schieberegistern realisiert ist.

6. Schaltungsanordnung (75) nach Anspruch 5, bei dem die Rückkopplungslogik für die Verschlüsselung in dem Schieberegister eines ersten der Schaltkreise linear, und in dem Schieberegister eines zweiten der Schaltkreise nichtlinear realisiert ist.

7. Schaltungsanordnung nach einem der Ansprüche 5 oder 6, bei dem die Rückkopplungslogik im Schieberegister im ersten Schaltkreis zwei Varianten der Verschlüsselung vorsieht, die alternativ in Abhängigkeit von der Auswahl des ersten Schlüssels (82) oder des zweiten Schlüssels (80) ausgeführt werden.

8. Schaltungsanordnung (75) nach einem der Ansprüche 1 bis 7, **dadurch gekennzeichnet, dass** der erste und der zweite Schaltkreis (14, 16) in demselben monolithischen Substrat gebildet sind.

9. Schaltungsanordnung (75) nach Anspruch 8, bei dem die Verbindung (62) zwischen der ersten (60) und zweiten Logikeinheit (64) und/oder zwischen der ersten Logikeinheit (60) und dem zweiten Schaltkreis (16) und/oder zwischen der zweiten Logikeinheit (64) und dem ersten Schaltkreis (14) durch Schutzmaßnahmen, insbesondere Metallisierungsschutzschichten, im monolithischen Substrat vor Angriffen geschützt ist.

10. Schaltungsanordnung (75) nach einem der vorhergehenden Ansprüche, bei welcher in dem ersten (40) und/oder zweiten Speicher (42) eine Adresse vorgesehen ist, bei der anhand eines Steuersignals gespeichert werden kann, welcher Bereich und welcher Schlüssel in dem ersten und/oder zweiten Schaltkreis (14, 16) für die Verschlüsselung der Nachricht ausgewählt wird, so dass die erste Logikeinheit (60) die logische "UND"-Verknüpfung der verschlüsselten Nachricht mit einer logischen "0" oder "1" durchführt in Abhängigkeit von einem Eintrag unter dieser Adresse.

11. Speicherkarte (10) mit Debit- oder Ausweiskartenfunktion, welche die Schaltungsanordnung (75) nach einem der Ansprüche 1 bis 10 aufweist.

12. Speicherkarte (10) mit Debit- oder Ausweiskartenfunktion nach Anspruch 11, welche als Telefonguthabenkarte ausgebildet ist.

13. Verfahren zur Authentikation einer Speicherkarte (10) mit Debit- oder Ausweiskartenfunktion gegenüber einem Terminal, umfassend:
- Bereitstellen einer Speicherkarte (10) mit einer Schaltungsanordnung gemäß Anspruch 1 in einem Terminal;
- Erzeugen einer Nachricht anhand einer Zufallszahl in dem Terminal (100);
- Übermitteln der Nachricht an den ersten (14) und zweiten Schaltkreis (16) der Schaltungsanordnung (75) in der Speicherkarte (10);
- Auswahl eines von wenigstens zwei Schlüsseln (80, 82), welcher über je einen der Adressbereiche (44, 46, 48, 50) in den Speichern (40, 42) der beiden schaltkreise (14, 16) verteilt gespeichert ist;
- paralleles und voreinander getrenntes Verschlüsseln der Nachricht im ersten Schaltkreis (14) anhand von Daten des ausgewählten Schlüssels, die im ersten Speicher (40) des ersten Schaltkreises (14) gespeichert sind, und im zweiten Schaltkreis (16) anhand von weiteren Daten dieses Schlüssels (82), die im zweiten Speicher (42) des zweiten Schaltkreises (16) gespeichert sind;
- Ausführen einer ersten logischen "UND"-Verknüpfung eines jeden Bits der im zweiten Schaltkreis verschlüsselten Nachricht mit einer logischen "0" oder einer logischen "1" in Abhängigkeit von dem ausgewählten Schlüssel;
- Ausführen einer zweiten logischen "exklusiv-ODER"-Verknüpfung eines jeden Bits der verschlüsselten Nachricht des ersten Schaltkreises (14) mit der verschlüsselten und verknüpften Nachricht des zweiten Schaltkreises (16).
- Übermittlung der mit der zweiten logischen Verknüpfung verknüpften Nachricht an das Terminal (100);
- Überprüfen der an das Terminal übermittelten Nachricht in dem Terminal (100) zur Bestimmung, ob der auf der Speicherkarte (10) gespeicherte Schlüssel (80, 82) ein mit dem Terminal (100) gemeinsames Geheimnis repräsentiert.

## Claims

1. Circuit arrangement (75) for a memory card (10) having a debit or ID card function, comprising:
- a first circuit (14), which also has:
(a) a first memory (40) having a first area (44), which stores data for a first key (82), and having a second area (46), which stores data for a second key (80), and
(b) a first security logic unit (56) for encrypting a message using the data from the first or second key (80, 82), wherein the first circuit (14) is able to receive the message from a terminal (100) that can be connected to the memory card (10);
- a second circuit (16), which also has:
(a) a second memory (42) having a third area (48), which stores further data for the first key (82), and having a fourth area (50), which stores arbitrary data, and
(b) a second security logic unit (58) for encrypting the message that the terminal (100) simultaneously transmits to the second circuit (16) using the further data from the first key (82) or the arbitrary data;
- a first logic unit (60), which is connected to the second circuit (16) and, on the basis of a selection of the first or second key (80, 82), performs bit-by-bit logic "AND"ing of the message encrypted in the second circuit (16), in each case exclusively with a logic "1" or exclusively with a logic "0";
- a second logic unit (64), which is respectively connected to the first circuit (14) and to the first logic unit (60) and is able to perform bit-by-bit logic "exclusive OR"ing of the message encrypted by the first security logic unit (56) of the first circuit (14) with the message encrypted by the second security logic unit (58) of the second circuit (16),
- an input/output unit (18) that is connected to the second logic unit (64) and is able to receive the logically combined, encrypted message therefrom and to transmit it to the terminal.

2. Circuit arrangement (75) according to Claim 1, in which the data from the first key (82) in the first and third areas (44, 48) together have a length and the data from the second key (80) in the second area (46) have a length, wherein the first length comprises twice as many bits as the second length.

3. Circuit arrangement (75) as claimed in Claim 1 or 2, in which the two circuits (14, 16) each have an input/output unit (18, 28), a voltage generation unit and control logic (38, 39) with an addressing unit for addressing the memory (40, 42), wherein the control logic (38, 39) is set up to perform, in a fifth area (52, 54) of the first (40) and/or second (42) memory, irreversible devaluation of a sum stored in the fifth area (52, 54).

4. Circuit arrangement (75) according to one of Claims 1 to 3, in which connecting units for a system clock (20, 30), a system reset (22, 32), an earth potential (24, 34) and a supply potential (26, 36) are respectively provided that are each connected to one another from circuit (14) to circuit (16) and are each collectively connected to appropriate contact pads (C1-C3, C5-C7) that are arranged on the memory card (10) and are set up for contact-connection by the terminal.

5. Circuit arrangement (75) according to one of Claims 1 to 4, in which the security logic unit (56, 58) has respective shift registers that are used to provide the encryption by means of feedback logic between the locations in the shift registers.

6. Circuit arrangement (75) according to Claim 5, in which the feedback logic for the encryption is provided linearly in the shift register of a first of the circuits and nonlinearly in the shift register of a second of the circuits.

7. Circuit arrangement according to one of Claims 5 and 6, in which the feedback logic in the shift register in the first circuit provides two variants of the encryption that are executed alternatively on the basis of the selection of the first key (82) or the second key (80).

8. Circuit arrangement (75) according to one of Claims 1 to 7, **characterized in that** the first and second circuits (14, 16) are formed in the same monolithic substrate.

9. Circuit arrangement (75) according to Claim 8, in which the connection (62) between the first (60) and second (64) logic unit and/or between the first logic unit (60) and the second circuit (16) and/or between the second logic unit (64) and the first circuit (14) is protected against attacks by protective measures, particularly metallization protection layers, in the monolithic substrate.

10. Circuit arrangement (75) according to one of the preceding claims, in which the first (40) and/or second (42) memory contains an address at which it is possible to use a control signal to store what area and what key are selected in the first and/or second circuit (14, 16) for encrypting the message, as a result of which the first logic unit (60) performs the logic "AND"ing of the encrypted message with a logic "0" or "1" on the basis of an entry at this address.

11. Memory card (10) having a debit or ID card function that has the circuit arrangement (75) according to one of Claims 1 to 10.

12. Memory card (10) having a debit or ID card function according to Claim 11 that is in the form of a telephone credit card.

13. Method for authenticating a memory card (10) having a debit or ID card function to a terminal, comprising:
- provision of a memory card (10) having a circuit arrangement according to Claim 1 in a terminal;
- production of a message using a random number in the terminal (100);
- transmission of the message to the first (14) and second (16) circuits of the circuit arrangement (75) in the memory card (10);
- selection of one of at least two keys (80, 82) that is stored in a manner distributed over one of the address areas (44, 46, 48, 50) in the memories (40, 42) of the two circuits (14, 16) in each case;
- parallel and mutually isolated encryption of the message in the first circuit (14) using data from the selected key that are stored in the first memory (40) of the first circuit (14) and in the second circuit (16) using further data from this key (82) that are stored in the second memory (42) of the second circuit (16);
- execution of a first logic "AND"ing of each bit of the message encrypted in the second circuit with a logic "0" or a logic "1" on the basis of the selected key;
- execution of a second logic "exclusive OR"ing of each bit of the encrypted message of the first circuit (14) with the encrypted and logically combined message of the second circuit (16);
- transmission of the message logically combined using the second logic function to the terminal (100);
- checking of the message transmitted to the terminal in the terminal (100) in order to determine whether the key (80, 82) stored on the memory card (10) represents a secret that is shared with the terminal (100).

## Revendications

1. Agencement de circuits (75) pour une carte mémoire (10) dotée d'une fonction de carte de débit ou d'identité, comprenant :
- un premier circuit (14), lequel comporte en outre :
(a) une première mémoire (40), avec une première zone (44) dans laquelle sont stockées des données d'une première clé (82), et avec une deuxième zone (46) dans laquelle sont stockées des données d'une deuxième clé (80), et
(b) une première unité logique de sécurité (56) destinée à crypter un message à l'aide des données de la première ou la deuxième clé (80, 82), le premier circuit (14) étant susceptible de recevoir le message d'un terminal (100) connectable à la carte mémoire (10) ;
- un deuxième circuit (16), lequel comporte en outre :
(a) une deuxième mémoire (42), avec une troisième zone (48) dans laquelle sont stockées d'autres données de la première clé (82), et avec une quatrième zone (50) dans laquelle sont stockées des données quelconques, et
(b) une deuxième unité logique de sécurité (58) destinée à crypter le message transmis simultanément au deuxième circuit (16) par le terminal (100), à l'aide des autres données de la première clé (82) ou des données quelconques ;
- une première unité logique (60), connectée au deuxième circuit (16) et réalisant bit par bit, en fonction d'une sélection de la première ou la deuxième clé (80, 82), une combinaison « ET » logique du message crypté dans le deuxième circuit (16), chaque fois exclusivement avec un « 1 » logique ou exclusivement avec un « 0 » logique ;
- une deuxième unité logique (64), connectée à la fois au premier circuit (14) et à la première unité logique (60) et susceptible de réaliser bit par bit une combinaison « OU exclusif » logique du message crypté par la première unité logique de sécurité (56) du premier circuit (14) avec le message crypté par la deuxième unité logique de sécurité (58) du deuxième circuit (16),
- une unité d'entrée et de sortie (18), connectée à la deuxième unité logique (64) et susceptible de recevoir de celle-ci, et de transmettre au terminal, le message crypté combiné logiquement.

2. Agencement de circuits (75) selon la revendication 1, dans lequel les données de la première clé (82), dans la première et la troisième zone (44, 48), ont ensemble une certaine longueur et les données de la deuxième clé (80), dans la deuxième zone (46), ont une certaine longueur, la première longueur comprenant deux fois plus de bits que la deuxième longueur.

3. Agencement de circuits (75) selon la revendication 1 ou 2, dans lequel les deux circuits (14, 16) ont chacun une unité d'entrée et de sortie (18, 28), une unité génératrice de tension et une logique de commande (38, 39) avec une unité d'adressage pour adresser la mémoire (40, 42), la logique de commande (38, 39) étant configurée pour procéder, dans une cinquième zone (52, 54) de la première (40) et/ou la deuxième mémoire (42), à une dévalorisation irréversible d'un montant stocké dans la cinquième zone (52, 54).

4. Agencement de circuits (75) selon l'une des revendications 1 à 3, dans lequel il est prévu des unités de raccordement pour une horloge système (20, 30), pour une réinitialisation du système (22, 32), pour un potentiel de base (24, 34) et un potentiel d'alimentation (26, 36), lesquelles unités sont reliées chaque fois entre elles, de circuit (14) en circuit (16), et chaque fois ensemble à des surfaces de contact (C1-C5-C7-C3) disposées sur la carte mémoire (10) et configurées pour être mises en contact par le terminal.

5. Agencement de circuits (75) selon l'une des revendications 1 à 4, dans lequel l'unité logique de sécurité (56, 58) comporte à chaque fois des registres à décalage permettant de réaliser le cryptage au moyen d'une logique de rétroaction entre les emplacements dans les registres à décalage.

6. Agencement de circuits (75) selon la revendication 5, dans lequel la logique de rétroaction pour le cryptage est réalisée de manière linéaire dans le registre à décalage d'un premier des circuits et de manière non linéaire dans le registre à décalage d'un deuxième des circuits.

7. Agencement de circuits (75) selon l'une des revendications 5 ou 6, dans lequel la logique de rétroaction prévoit dans le registre à décalage du premier circuit deux variantes de cryptage qui sont exécutées alternativement en fonction de la sélection de la première clé (82) ou de la deuxième clé (80).

8. Agencement de circuits (75) selon l'une des revendications 1 à 7, **caractérisé en ce que** le premier et le deuxième circuit (14, 16) sont formés dans le même substrat monolithique.

9. Agencement de circuits (75) selon la revendication 8, dans lequel la connexion (62) entre la première (60) et la deuxième unité logique (64) et/ou entre la première unité logique (60) et le deuxième circuit (16) et/ou entre la deuxième unité logique (64) et le premier circuit (14) est protégée contre des attaques dans le substrat monolithique par des mesures de protection, en particulier des couches protectrices de métallisation.

10. Agencement de circuits (75) selon l'une des revendications précédentes, dans lequel il est prévu, dans la première (40) et/ou la deuxième mémoire (42), une adresse sous laquelle il est possible de mémoriser au moyen d'un signal de commande quelle zone et quelle clé du premier et/ou du deuxième circuit (14, 16) est sélectionnée pour le cryptage du message, de telle sorte que la première unité logique (60) réalise la combinaison « ET » logique du message crypté avec un « 0 » ou « 1 » logique, en fonction d'une entrée sous cette adresse.

11. Carte mémoire (10) dotée d'une fonction de carte de débit et d'identité, qui comporte l'agencement de circuits (75) selon l'une des revendications 1 à 10.

12. Carte mémoire (10) dotée d'une fonction de carte de débit et d'identité, qui est réalisée comme carte de crédit d'appel.

13. Procédé d'authentification d'une carte mémoire (10) dotée d'une fonction de carte de débit ou d'identité par rapport à un terminal, comprenant :
- fourniture d'une carte mémoire (10) comportant un agencement de circuits selon la revendication 1 dans un terminal ;
- génération d'un message à l'aide d'un nombre aléatoire dans le terminal (100) ;
- transmission du message au premier (14) et au deuxième circuit (16) de l'agencement de circuits (75) dans la carte mémoire (10) ;
- sélection d'une d'au moins deux clés (80, 82), laquelle est répartie et stockée sur respectivement une des plages d'adresses (44, 46, 48, 50) dans les mémoires (40, 42) des deux circuits (14, 16) ;
- cryptage parallèle et séparé du message dans le premier circuit (14), à l'aide de données de la clé sélectionnée stockées dans la première mémoire (40) du premier circuit (14), et dans le deuxième circuit (16), à l'aide d'autres données de cette clé (82) stockées dans la deuxième mémoire (42) du deuxième circuit (16) ;
- réalisation d'une première combinaison « ET » logique de chacun des bits du message crypté dans le deuxième circuit avec un « 0 » logique ou un « 1 » logique, en fonction de la clé sélectionnée ;
- réalisation d'une deuxième combinaison « OU exclusif » logique de chacun des bits du message crypté du premier circuit (14) avec le message crypté et combiné du deuxième circuit (16) ;
- transmission du message combiné avec la deuxième combinaison logique au terminal (100) ;
- vérification du message transmis au terminal dans le terminal (100) afin de déterminer si la clé (80, 82) stockée sur la carte mémoire (10) représente un secret partagé avec le terminal (100).
